Europäisches Patentamt

European Patent Office

Office européen des brevets

(11) Publication number: **0 101 507**
**B1**

# EUROPEAN PATENT SPECIFICATION

(45) Date of publication of patent specification: **14.06.89**

(51) Int. Cl.⁴: **G 03 H 1/22,** G 06 G 9/00

(21) Application number: **83901023.8**

(22) Date of filing: **14.02.83**

(86) International application number:
**PCT/US83/00184**

(87) International publication number:
**WO 83/02831 18.08.83 Gazette 83/19**

(54) **HOLOGRAPHIC OPTICAL PROCESSING METHOD AND APPARATUS.**

(30) Priority: **12.02.82 US 348461**

(43) Date of publication of application:
**29.02.84 Bulletin 84/09**

(45) Publication of the grant of the patent:
**14.06.89 Bulletin 89/24**

(84) Designated Contracting States:
**DE FR GB**

(56) References cited:
US-A-3 511 554
US-A-3 514 176
US-A-3 604 777
US-A-3 632 182
US-A-4 220 928

N, Applied Optics, VOL. 17 No. 6 issued 15 March 1978, Briones et al, "HOLOGRAPHIC MICROSCOPY"

(73) Proprietor: **UNIVERSITY OF DAYTON**
**300 College Park**
**Dayton, Ohio 45469 (US)**

(72) Inventor: **FUSEK, Richard Lee**
**2620 Delavan Drive**
**Dayton, OH 45459 (US)**
Inventor: **HARRIS, James Stuart**
**1495 Bimni Drive**
**Centreville, OH 45459 (US)**
Inventor: **HARDING, Kevin George**
**907 Nordale Avenue**
**Dayton, OH 45420 (US)**

(74) Representative: **Warren, Keith Stanley et al**
**BARON & WARREN 18 South End Kensington**
**London W8 5BU (GB)**

(56) References cited:

N, Applied Physics Letters, issued 01 July 1968, Toth et al, "Reconstruction of a Three-Dimensional Microscopic Sample Using Holographics Techniques"

N, Science, VOL. 153, issued 26 August 1966, Knox, "Holographic Microscopy as a Technique for Recording Microscopic Subjects"

Courier Press, Leamington Spa, England.

## Description

The present invention relates generally to analysis of the microstructure present in large transparent or semi-transparent volumes or over large object surface areas and, more particularly, to the performance of such analysis through the use of the optical processing techniques.

As is well known in the art, an optical Fourier transformation can be performed on a subject by illuminating the subject with a coherent light source and using a lens to collect the reflected, and/or diffracted and/or transmitted light containing optical information corresponding to the subject. The lens will define a Fourier transform of the original subject information in a plane located one focal length away from the lens at its focus. With this process, subject information is redistributed in the Fourier transform plane to correspond to spatial frequency content. A second lens, located two focal lengths from the first, images the information onto a display screen, recording medium, or the like.

The optical information coming from the subject may be manipulated for the purpose of enhancing detail, removing unwanted subject information, isolating defects, or making precise topographic and optical path measurements. This is accomplished by blocking a portion of the subject information or changing its phase within the transform plane. These techniques are particularly useful where the subject consists of repetitive spatial frequency content such as is present in photomasks or wafers used in the production of microelectronic circuits, since the optical Fourier transform will consist of an array of regularly spaced points of light whose distance from the optical axis is proprtional to the spatial frequency.

One example of such a technique is disclosed in U.S. Patent No. 4,000,949 issued January 4, 1977 to Watkins. Using the basic processing scheme outlined above, a photomask is used as the subject. An optical spatial filter is placed within the Fourier transform plane for blocking all subject information other than that corresponding to nonperiodic defects in the mask. Since only defect information will pass through to the display screen, the number of defects and their locations can be determined.

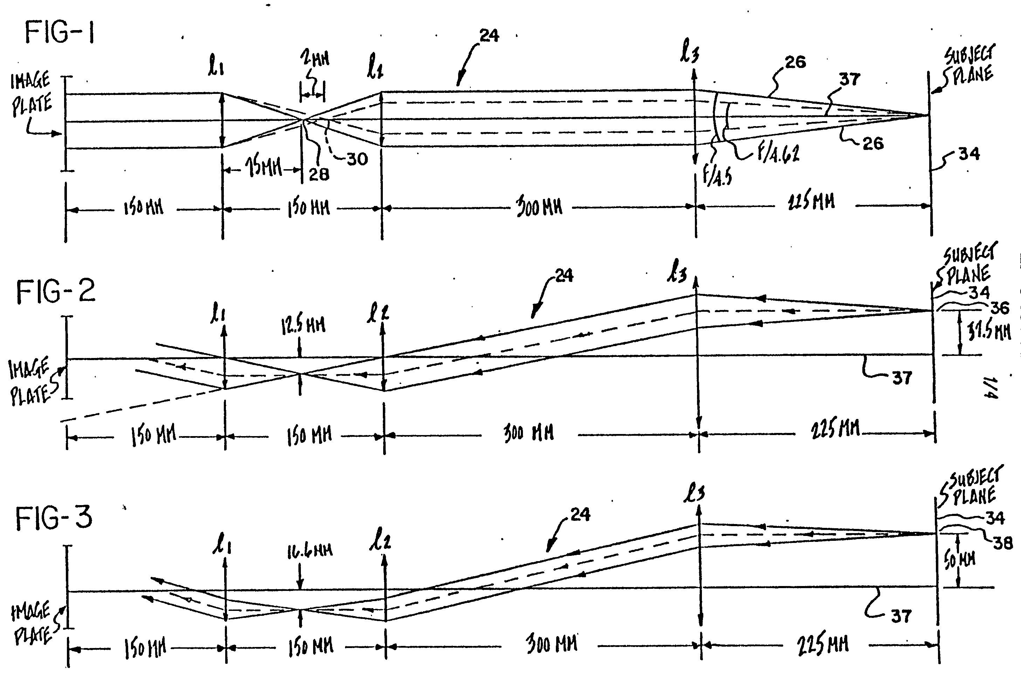

It can be easily seen, however, that abberations within the optical components of an optical processor, particularly within lenses focusing the subject information and/or the processed information, will be a significant detriment to use of the optical processor with subjects having microscopic detail. On axis, for example, a focus error aberration can cause loss of spatial frequency information, as illustrated by way of example for a typical optical telescope system in Figure 1.

A three-lens system 24 is shown, wherein lenses $l_1$ and $l_2$ are F/1.50, 50 mm diameter, 75 mm focal length lenses, and lens $l_3$ is an F/1.50, 150 mm diameter, 225 mm focal length lens. Assuming the sum of the spherical aberration from lenses $l_2$ and $l_3$ to be 2 mm, the focus of the rays 26 entering the system 24 is moved from a point 28 to a point 30, 77 mm away from lens $l_1$. This results in a smaller, F/1.54 collection angle at lens $l_1$.

Therefore, with a 225 mm focal length for lens $l_3$, which would give an F/4.5 collection angle for lens $l_3$ and the system 24 as a whole if lens $l_1$ collected F/1.50, the lens can only collect:

$$\frac{1.50}{1.54} = \frac{4.50}{Y} \quad Y = \frac{(1.54)\,(4.50)}{1.50} = F/4.64.$$

Similarly, for 1 mm of special aberration, the focal point is moved to 76 mm away from lens $l_1$ and:

$$Y = \frac{(1.52)\,(4.50)}{1.50} = F/4.56$$

for the system 24.

To consider these effects directly, the optical transfer function (OTF) of the system may be looked to. For a diffraction limited system:

$$OTF = H(f_x, f_y) = \frac{\iint_{a(f_x, f_y)} d\xi d\eta}{\iint a_{(o,o)} d\xi d\eta}$$

where $a(f_x, f_y)$ is the area of overlap of the pupil collecting spatial frequencies with the restricting pupil function.

The OTF with aberrations for two pupils given by:

$$P\left(\xi - \frac{\lambda d_i f_x}{2},\ \eta - \frac{\lambda d_i f_y}{2}\right) \quad \text{and} \quad P\left(\xi + \frac{\lambda d_i f_x}{2},\ \eta + \frac{\lambda d_i f_y}{2}\right)$$

is

$$H'(f_x,f_y)=a(f_x,f_y)\ exp\ \left\{ik\left[W\left(\xi+\frac{\lambda d_i f_x}{2},\ \eta+\frac{\lambda d_i f_y}{2}\right)-W\left(\xi-\frac{\lambda d_i f_x}{2},\ \eta-\frac{\lambda d_i f_y}{2}\right)\right]\right\}d\xi d\eta$$
$$\frac{}{\iint d\xi d\eta}$$
$$a(o,o)$$

where W is the aberration function.

The Schwarz inequality,

$$\left|\iint XY\ d\xi d\eta\right|^2\leq\left(\iint|X|^2 d\xi d\eta\right)\left(\iint|Y|^2\ d\xi d\eta\right)$$

can be used to show directly that

$$|H'(f_x,f_y)_{aber.}|^2\leq|H(f_x,f_y)_{no\ aberrations}|^2$$

This means that aberrations never increase the MTF (the modulus of the OTF), but rather lower the contrast of each spatial frequency component. Thus, the cutoff to the spatial frequency passed by the system will be effectively decreased and the effective F-number thereof will increase. This is especially important if there is a random background to further decrease the contrast.

Off-axis, spatial frequency information can be lost even in an ideal aberration-free system directly due to vignetting, as shown in Figures 2 and 3. Again, considering the sample three-lens optical system 24, the limit of the system 24 is found by tracing rays from the edge of lens $l_1$. The angle of incidence of these rays at a point on the subject plane 34 gives the cone angle of spatial frequency information which can be collected from that point on the subject.

In Figure 2, using a thin lens ray trace, it can be seen that only an F/9 cone can be collected by system 24 from a point 36 located 37.5 mm off the axis 37. In Figure 3, a point 38 located 50 mm off the axis 37 is considered. Again using a thin lens ray trace, it can be seen that only an F/13.5 cone can be collected due to vignetting.

In order to utilize optical processing techniques on objects having microscopic detail with an optical system such as is used in Watkins, it is necessary to employ within the system optical components of very high quality. Such components will then minimize aberrations within the system. Additionally, to avoid loss of information due to vignetting, system apertures must be made as large as possible. Unfortunately, large aperture optical components of very high quality, particularly lenses, can be obtained only at extremely high cost, making optical processing for such objects for less practical.

Use of high quality lenses creates additional complications other than cost where high-resolution records are desired, since as the resolution of an imaging optic is increased, the depth of focus thereof decreases. Thus, the depth of focus available in the image plane is limited.

Full-field documentation with relatively high resolution can be accomplished through holography. By holographically recording a subject, and then reconstructing the holographic image with the conjugate to the reference beam, a three-dimensional real image of the object is created in space. This real image can then be examined microscopically as if it were the original illuminated object. An added advantage is that a holographic system can document not only reflecting surfaces but also the microstructure inside a thick, transparent object such as optical components. Since the holographic image has no substance, a microscope can focus through the image, even to the opposite side if desired, without the need for a long focus and high quality objective required when a solid object is in the way.

Examples of previously work in holographic microscopy are disclosed in Leith and Upatneiks, "Microscopy by Wavefront Reconstruction", 55 J. Opt. Soc. Amer. 569 (1965); Toth and Collins, "Reconstruction of a Three-Dimensional Microscope Sample Using Holographic Techniques", 13 Appl. Phys. Letters 7 (1968); and Briones, Heflinger and Wuerker, "Holographic Microscopy", 17 Appl. Optics 944 (1978). The records produced are large aperture wide field of view, large depth of field, three-dimensional images of both transmitting volumes and specularly or diffuse reflecting subjects. Such work, however, has not as yet obtained both the necessary resolution and field of view for viewing and/or analyzing the microstructure of large object surface areas.

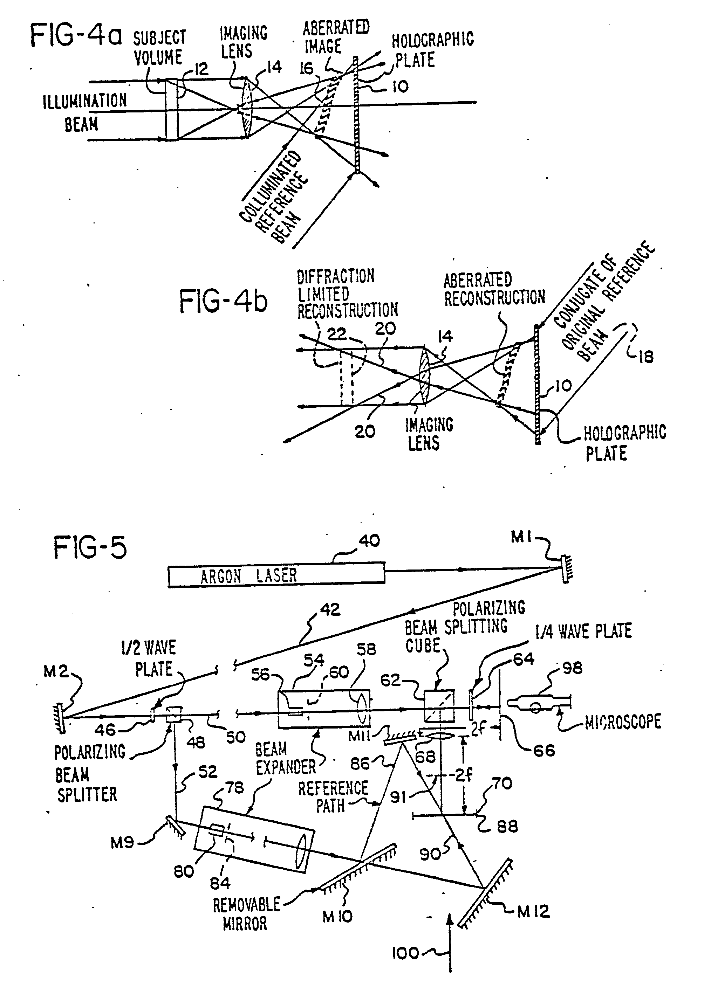

One technique available in holography, described in Toth and Collins and in Briones, Heflinger and Wuerker, is known as reverse ray-tracing. When a hologram 10 is made of a subject 12 through a lens 14 or other optical components, the image information 16 from the subject may be aberrated by the lens 14 (Figure 4a). If the hologram 10 is repositioned accurately with respect to the lens 14, and the conjugate to the reference beam 18, i.e., the same wavefront as the reference beam but travelling in the opposite direction, is used to reconstruct the holographic image, the image rays 20 will exactly retrace the path of the original subject rays back through the optical system (Figure 4b). This is not the same as merely turning the lens 14 around, since the information about the lens aberration is stored in the hologram 10. Therefore, the aberrations of the lens 14 will be completely compensated for upon reconstruction and the holographic image 22 will be diffraction limited.

It can be seen that to produce a high resolution holographic image 22, it is not necessary to use a high quality lens 14. Thus, it would appear promising to attempt to incorporate the holographic reverse ray-trace technique into an optical processing system.

What is needed, therefore, is a method and apparatus for optical processing that utilizes holography, and specifically the reverse ray-tracing technique. Such a method and apparatus would enable optical processing to be performed on both detailed three-dimension microscopic and macroscopic subjects with high resolution.

It is an object of the present invention to provide a method and apparatus for isolating microscopic defects in a macroscopic subject having periodic nondefect information by producing images free from aberrations due to components of the system and capable of microscopic examination.

Hence, from one aspect, the invention consists in a method of isolating microscopic defects in a macroscopic subject having periodic nondefect information, the subject being disposed within a subject plane, comprising the steps of:—

directing a first coherent beam of light at the subject such that said light is diffracted, reflected and/or transmitted thereby, whereafter said beam contains optical information regarding the subject;

focusing said beam containing said subject information so as to define a Fourier transform plane and to image said information within an image plane beyond said transform plane;

disposing means for recording a hologram thereon at or near said image plane so as to receive thereon said beam containing said subject information;

directing a second coherent beam of light onto said recording means from a first direction so as to form an interference pattern with said first beam containing said subject information;

recording a hologram of said subject information on said recording means;

directing said second beam to said recording means from a direction conjugate to said first direction for diffraction thereby to the subject plane in a direction exactly opposite to that travelled by said first beam containing said subject information, whereby said Fourier transform is redefined at said transform plane and said subject information is carried within said second beam to the subject plane; and

manipulating said subject information contained within one of said beams at said transform plane to remove periodic nondefect information by blocking at least a portion of said subject information within one of said beams at said transform plane by positioning within said plane an optical spatial filter configured to block periodic nondefect information.

From another aspect, the invention consists in apparatus for isolating microscopic defects in a macroscopic subject having periodic nondefect information, the subject being disposed within a subject plane, comprising:

a source for generating a substantially coherent beam of light;

means for dividing said beam into a first beam and a second beam,

means for directing said first beam to the subject such that said beam is diffracted, reflected and/or transmitted thereby, whereafter said beam contains optical information regarding the subject;

means for recording a hologram of the subject thereon;

means for passing therethrough said first beam containing subject information, focusing said beam to define a Fourier transform within a transform plane, and imaging said beam onto or near said recording means;

means for directing said second beam to said recording means from a first direction at a predetermined angle of incidence thereon so as to form an interference pattern;

means for directing said second beam to said recording means in a direction conjugate to said first direction for diffraction thereby into said means for passing, focusing and imaging the first beam, in a direction exactly opposite to that travelled by said first beam therethrough, so that subject information is carried within said second beam and a holographic image is reconstructed at said subject plane; and

means for manipulating said subject information contained within one of said beams at said Fourier transform plane, including an optical spatial filter configured to block and thereby remove periodic nondefect information, said filter being disposable within said transform plane.

Thus the invention provides a method and apparatus for performing optical processing on optical information corresponding to a subject that combines known optical processing techniques with holography. By utilizing a reverse ray-trace holographic system, aberrations introduced by the system optics are completely compensated for, producing diffraction-limited three dimensional images of a subject. A single large aperture lens may be used to define the Fourier transform of the optical subject information as the hologram is recorded or the image reconstructed, and the subject information is manipulated with the transform plane.

The source for generating a coherent beam of light, preferably an argon ion laser operating single frequency, may provide a beam to a beamsplitter that divides the beam into the first or subject beam and the second or reference beam. The subject beam is directed to the subject where it may be reflected and/or diffracted thereby. The beam, which now contains optical information regarding the subject, may be passed through a lens and focused to define the Fourier transform, imaging the information in the vicinity of the recording means, such as a photographic plate or other photo-sensitive material. The reference beam is simultaneously directed onto the plate at a predetermined angle of incidence.

After processing, the hologram is replaced and illuminated with the reference beam which is redirected onto the plate in a direction conjugate to the original reference beam. Subject information from the

4

hologram is then exactly reverse ray traced back through the optical system following the same path but in the reversed direction as original subject rays during recording. A three-dimensional real image of the original subject is formed at the original subject location. Because of the exact reverse ray-trace feature, optical distortions or aberrations introduced by optical elements in the system are completely eliminated thus providing a diffraction limited three-dimensional real image.

The subject information may be manipulated at the Fourier transform either during recording of the hologram or during image reconstruction. This may be performed, for example, by placing a blocking filter within the transform plane for blocking at least a portion of the subject information. Alternatively, a filter may be placed within the transform plane for altering the phase of at least one of ths beams passing therethrough. Other processing techniques are also possible.

This invention offers several imortant advantages over known optical processing systems and methods.

First, the reverse ray-trace of the image inxormation through the optical system provides an image that is free of aberrations introduced by optical elements.

Second, since such aberrations are eliminated, the optical quality of the imaging optic is not as critical as in known systems. This permits use of components of lesser quality, with very significant reductions in costs.

Third, the use of a single, large-aperture lens may provide for a wide field-of-view, with little information loss due to vignetting.

Fourth, the high resolution obtained with this invention enables microscopic evaluation of recorded images, and enhances results obtained through non-holographic optical processing.

In order that the invention may be more readily understood, reference will now be made to the accompanying drawings, in which:—

Figure 1 is a diagram of a hypothetical telescope system, showing the effect of focus error aberration;

Figure 2 illustrates the hypothetical telescope system of Figure 1, showing the effect of vignetting;

Figure 3 illustrates the hypothetical telescope system of Figure 1, again showing the effect of vignetting;

Figure 4a is a diagram illustrating generally the recording of a hologram, showing introduction of aberration into the image information;

Figure 4b is a diagram illustrating generally the reconstruction of a holographic image, wherein reverse ray tracing eliminates aberration from the image information;

Figure 5 is a diagram of the apparatus of the present invention;

Figure 6 is a diagram of an alternative embodiment of a portion of the present invention for use when the subject is a transparent or semi-transparent volume;

Figure 7 is a diagram of a further alternative embodiment of a portion of the present invention for use when the subject is a transparent or semi-transparent volume.

Figure 8 is a diagram of a still further alternative embodiment of a portion of the present invention for use when the subject is a transparent or semitransparent volume;

Figure 9 is a diagram of an alternative embodiment of a portion of the present invention for recording an image plane hologram; and

Figure 10 is a diagram showing image reconstruction with the embodiment of Figure 9.

Referring now to the drawings of the preferred embodiments of the invention, and particularly to Figure 5, the optical processing apparatus includes a laser 40 that provides a source for generating a coherent beam of light 42.

In the preferred embodiment, an argon ion laser operating single frequency at a wavelength of 0.5145 micrometers is used, in particular, a Spectra Physics Model 166-09 Argon Laser. Any laser source, however, whose output wavelength is compatible with the recording medium will work, including but not restricted to helium-neon, krypton, ruby, neodymium YAG or glass, and metal vapor lasers.

Beam 42 is directed by mirrors M1 and M2 into the system 44 and passes through a half-wave plate 46 which allows the angle of polarization to be continuously adjusted before entering the polarizing beamsplitter 48. It should be noted, however, that although polarizing beamsplitting techniques are used in the preferred embodiment to conserve energy and allow maximum flexibility, any beamsplitting technique that divides the incoming beam into two components will work, such as metal films, grating, dielectric films and holographic elements.

Beamsplitter 48 divides the input beam 42 into a first or subject beam 50 and a second or reference beam 52 having an intensity ratio determined by the angle of polarization of the incoming beam.

The subject beam 50 is then directed to a means 54 for expanding, filtering and collimating beam 50 including lenses 56 and 58 and a mask having a pinhole 60. It then passes through a second polarizing beamsplitter 62 which serves as a selective beam director. This is accomplished in the following manner: light entering this director (beamsplitter 62) passes through because of the polarization orientation established by beamsplitter 48. Beam 50 then passes through a quarter-wave plate 64 where it is converted from linear to circular polarization. It then strikes a subject 66 and is reflected thereby back through the quarter-wave plate 64 where it is converted back to linear polarization but orthogonally oriented. This causes the subject beam 50 to be reflected by the beam-slitter 62 towards a large aperture lens 68 which forms an image in the vicinity of a means for recording the hologram. In the preferred embodiment, lens 68 is a symmetric doublet pair, imaging subject 66 on or near the recording means at one-to-one magnification to maximize the information collected by the lens 68. Other means for directing the subject information to the recording means may be used.

While the recording means is shown in the preferred embodiment as a photographic plate 70, it will be recognized that it may be any photo-sensitive material such as photographic films or plates, thermoplastic films, crystalline materials, or any other material capable of recording a hologram.

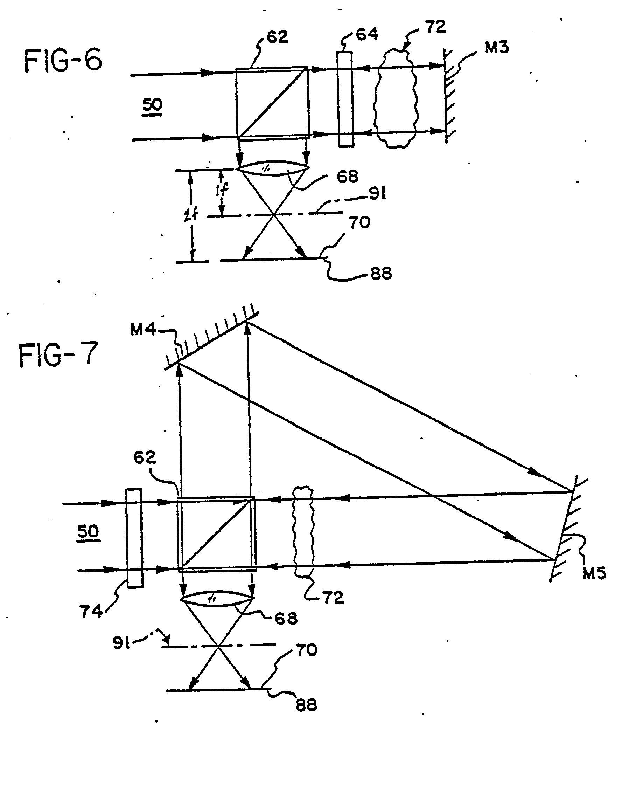

Figure 6 shows the preferred arrangement if the subject is a transmitting volume 72. Here a mirror M3 is placed behind the subject 72 which causes the subject beam 50 to be reflected back through the quarter wave plate 64. This double pass scheme offers the advantage that anomalies of interest present in a subject volume 72 are illuminated from both the front and the back thus enhancing visibility. When using the invention to make interferometric measurements of optical path changes or differences, double passing the volume doubles the measurement sensitivity.

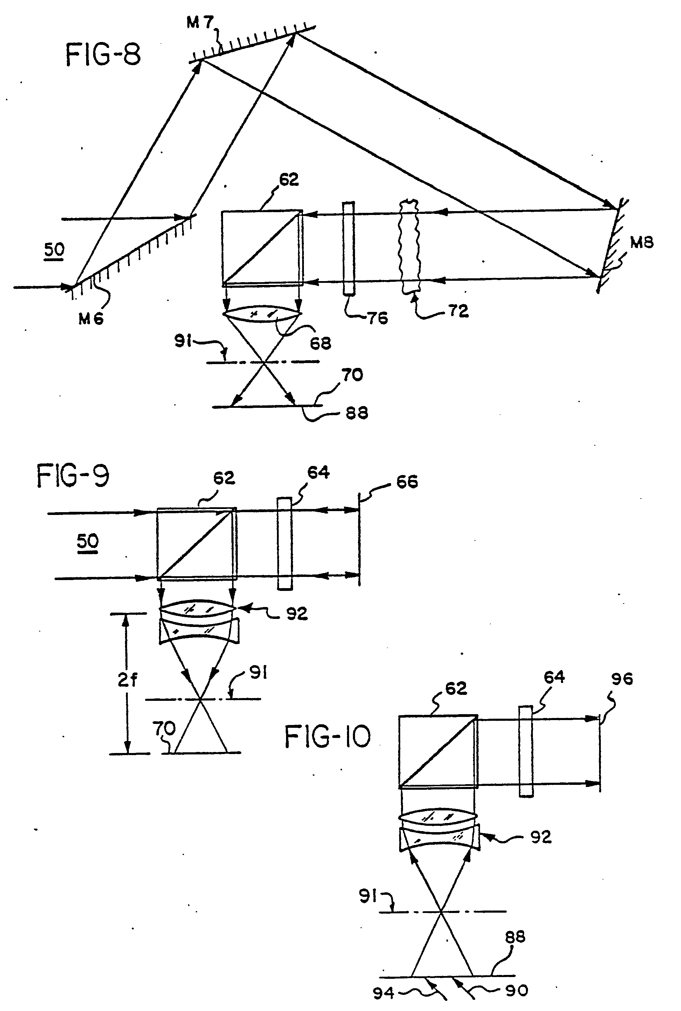

The variation shown in Figure 7, or the more preferred Figure 8, is used if the double passing or front illumination of a subject volume 72 is undesirable (e.g., in recording or optical processing of transparencies). Referring to Figure 7, a half-wave plate 74 is placed in the subject beam 50 ahead of polarizing beamsplitter 62. This allows for adjustment of the subject beam polarization angle and is set to provide vertical or s polarization. Beam-splitter 62 now reflects the subject beam 50 toward mirror M4. This mirror directs the beam to mirror M5, where it is directed through the subject or subject volume 72 and back into beamsplitter 62 and thus into lens 68 as described above.

Similarly, in the preferred variation shown in Figure 8, the subject beam 50 is directed around the beamsplitter 62 by mirrors M6 and M7 where it is directed through the subject 72 and half-wave plate 76 by mirror M8. It then passes through the system to the photographic plate 70 as previously described.

Referring back to Figure 5, the reference beam 52 generated from beamsplitter 48 is directed by mirror M9 towards a means 78 for expanding, filtering and collimating beam 52 consisting of lenses 80 and 82, and a mask having a pinhole 84. Beam 52 is expanded and collimated and directed towards mirror M10. In the recording mode, mirrors M10 and M11 direct the reference beam 52 along reference path 86 to the photographic plate 70 where beam 52 combines with the subject beam 50 to expose plate 70, whereupon a hologram 88 is formed in plate 70.

After processing the hologram 88 and returning it to position, mirror M10 is removed and mirror M12 directs the reference beam 52 towards the hologram 88 from the conjugate direction along conjugate path 90. Subject information from hologram 88 will then exactly reverse ray-trace back through lens 68 and beamsplitter 62 following the same path but in the reversed direction as the original subject beam 50 during recording. A three-dimensional image of the subject 66 will be formed at its original location. Because of the exact reverse ray-trace feature, optical distortions or aberrations introduced by optical elements such as lens 68, beamsplitter 62, or the like will be eliminated, providing a diffraction limited three-dimensional real image.

In the variation shown in Figure 9, when the subject 66 or a portion thereof is flat (for example, an integrated circuit mask), the lens used is color corrected (for example, achromat 92), and if care is taken to image the subject 66 on the surface of the plate 70, an image plane hologram is recorded. This image plane hologram can then be illuminated for reconstruction with a broadband source such as white light. This technique offers the advantage that incoherent source illumination will eliminate coherent noise in the reconstructed image. Reconstruction is illustrated in Figure 10 where the hologram 88 is illuminated with a broadband beam 94 along the conjugate path 90. Reconstruction of the image point will occur at the original subject position 96.

There may be background noise in the holographic image which is not located at the subject plane. If the reference beam's angle of incidence is changed slightly during image reconstruction, this dislocated background noise moves across the field of view while the image is stationary. Therefore, much of this background noise originates from other optical components in the system. Dithering the reference beam 52 while viewing or photographing the holographic image smoothes out the dislocated background and increases the effective contrast. However, this is effective only for a single plane in the reconstructed image, because only a single-image plane of the subject can be exactly imaged in the plane of the hologram. Points in the reconstruction corresponding to points off the hologram are displaced with dithering of the reference beam 52 and will smear out.

In the preferred embodiment, hologram 88 is formed in an Agfa 8E56HD 10.2 cm×12.7 cm (4″×5″) plate. The preferred developing processes, as experimentally determined, are either PAAP or HRP/Bromine Methanol. These were found to give substantially better results than standard D-19 processing. The lens 68 described herein collects approximately an F/3.5 cone of light. Thus, the reconstructed real holographic image is diffraction limited for the F/3.5 optical system:

$$\text{diffraction limited diameter} = 2.44 \; \lambda \; (\text{F-number}).$$

$$= 2.44 \; (.5145 \; \mu m) \; (3.5) = 4.4 \; \mu m.$$

In experimental testing of the system, however, it appears that resolution of the holographic image better than four μm is attainable.

Because of the high resolution obtained with the presently disclosed system, documentation of the microstructure of a subject is readily facilitated. The reconstructed image may be studied microscopically at the original subject plane through an appropriate means therefor, such as microscope 98 shown in Figure 5. Moreover, the observed information may be recorded, for example, by a camera (not shown) or other means, used in conjunction with microscope 98.

Because collimated coherent light is used to illuminate the subject in conjunction with a focusing element, an optical Fourier transform of subject information is formed in each of the embodiments of Figures 5—9 between the hologram 88 and the lens 68, one focal length from the focusing element, as seen for example at 91 in Figure 6. This transform plane 91 is used to manipulate the subject information such as spatial frequency content, distribution, and phase, by placing appropriate phase and blocking filters at this location. Such filters may be of any of the presently known optical filters, examples of which are disclosed in U.S. Patent No. 4,000,949, issued January 4, 1977, to Watkins, and U.S. Patent No. 4,299,443, issued November 10, 1981, to Minami et al. This serves to optically process subject information and can be performed prior to initial recording of the hologram or after the hologram has been recorded. In either case, the present invention offers several advantages over standard optical processors.

First, the inverse Fourier transform is performed by the same optics that produced the original transform because of the reverse ray-trace feature of this process. Second, the optical quality of the imaging optic need only be sufficient to separate spatial frequencies at the Fourier transform plane relating to the desired image information. This significantly reduces the cost and broadens the applications for optical processing. In general, the Fourier transform is less sensitive to lens aberrations than the image. Third, the use of a single, large aperture lens provides for a wide field-of-view, with little information loss due to vignetting. Finally, the same apparatus may be used to produce effective blocking filters on photosensitive material such as photographic plates, which are accurately matched to the subject's spatial frequency locations in the Fourier transform plane.

The optical processing may be performed through a number of techniques for a variety of reasons. For example, the bloking filters may be placed within the transform plane in order to partially or completely block all or a part of the subject information within the Fourier transform. This will enable the reconstructed image to have certain details suppressed, or a portion of the image to be removed entirely. Particular information is isolated for finding the locations of defects within a particular subject. While these advantages are available from optical processing generally, the high resolution achieved with the present invention enables such techniques to be carried out at microscopic levels and at reasonable cost. Additionally, since the filtering may be performed during image reconstruction, the subject itself is required only long enough to record a hologram, allowing optical processing to be performed at a later time.

The optical processing may also be performed through a technique known generally as matched filtering. Rather than completely blocking all or a portion of the subject information as with blocking filters, all or a portion of the information may be diffracted (and/or reflected) out of the optical system at the transform plane. This may serve as a means of effectively blocking information, but can also be used to direct the deflected portion of the information into one or more other systems where the information can be detected, observed, recorded, and/or further manipulated. Matched filtering may have any one of a number of practical applications, such as the separate isolation or detection of specific information pertaining to selected objects or features of a single object. This technique is accomplished using a selective refractive and/or diffractive medium, such as a hologram, as the matched filter.

The subject can also be compared to an unperturbed reference wavefront in the following manner. A hologram 88 is made of the subject, processed, repositioned at its original location, and reilluminated with the reference beam 52 from the conjugate direction 90 via mirror M12. A second reference beam is then combined with the real holographic image at the original subject location via the path of original subject beam 50 and beam director 62. If the intensities are then made equal by adjusting half-wave plate 46, a fringe pattern can be observed. This fringe pattern will map the difference in optical path between the surface figure or optical density of the subject and the wavefront shape of the reference wavefront. Thus, the subject may easily be compared to an ideal flat or spherical surface.

If a plane reference wavefront is combined with the subject image wavefront but is shifted in phase by a quarter-wave relative to the beam used to reconstruct the holographic image, small changes in the subject's surface topography will be highlighted by interference fringes. This is accomplished using the technique outlined above for comparison to an unperturned reference wavefront, but with a filter placed at the Fourier transform 91 of lens 68 so as to pass only the zero order component therethrough. Either the reference beam 52 or the subject beam 50 is shifted in phase by means of a quarter-wave plate. The phase contrast fringe pattern is then viewed at the subject location.

A permanent record of the phase contrast image of the subject can be recorded by means of a double exposure hologram. A hologram of the subject is first recorded, and the filter is placed at the transform plane 91. Either the reference or subject beam 52 or 50 is shifted in phase by a quarter-wave, and a second hologram is recorded on the same holographic plate. After processing and replacement to its original position, the hologram is then illuminated from the back or conjugate reference beam direction via mirror M12. Both the holographic image of the subject and the reference wavefront will then be reconstructed at the original subject position and can be viewed, for instance, with microscope 98.

7

Real time holographic interferometric analysis of the subject may be accomplished by first recording a hologram with the apparatus arranged as in any of Figures 5—9, depending on the subject type. The developed hologram 88 is then replaced in its original position, with the aid of a kinematic mount, and illuminated with the recording reference beam 52 with mirror M10 in place. Viewing would occur from the position indicated by arrow 100 (Figure 5).

If either the original subject 66 or 72, or some new subject to be compared, is simultaneously illuminated with light from subject beam 50, and made equal in intensity to the holographic image intensity by adjusting half-wave plate 46, then differences in subject optical paths will be observed as fringes appearing on or near the subject. These optical path differences are referenced to the subjct as originally recorded.

A diffraction limited interferogram can be reconstructed in the following manner. A double-exposed hologram is recorded by first recording a hologram of the subject in its reference state. Changes to the subject are then made or a different subject is inserted, and a second hologram is recorded on the same holographic plate. After processing and replacement to its original position, it is then illuminated by reference beam 52 from the back or conjugate direction 90 via mirror M12. Both holographic images will then reconstruct at the original subject position and can be viewed therefrom. Optical path differences due to changes in the subject occurring between exposures or differences between the two subjects will be observed as fringes on or near the reconstructed subject's image. Since this interferogram is inherently diffraction limited, due to the reverse ray-trace feature, extremely small fringe spacings can be accurately measured through a magnifying device, such as microscope 98.

**Claims**

1. A method of isolating microscopic defects in a macroscopic subject (66) having periodic nondefect information the subject being disposed within a subject plane, comprising the steps of:

directing a first coherent beam of light (50) at the subject (66) such that said light is diffracted, reflected and/or transmitted thereby, whereafter said beam contains optical information regarding the subject;

focusing said beam containing said subject information so as to define a Fourier transform plane (91) and to image said information within an image plane beyond said transform plane;

disposing means (70) for recording a hologram thereon at or near said image plane so as to receive thereon said beam containing said subject information;

directing a second coherent beam of light (52) onto said recording means (70) from a first direction so as to form an interference pattern with said first beam (50) containing said subject information;

recording a hologram (88) of said subject information on said recording means (70);

directing said second beam (52) to said recording means from a direction conjugate to said first direction for diffraction thereby to the subject plane in a direction exactly oppositely to that travelled by said first beam containing said subject information, whereby said Fourier transform is redefined at said transform plane and said subject information is carried within said second beam to the subject plane; and

manipulating said subject information contained within one of said beams at said transform plane to remove periodic nondefect information by blocking at least a portion of said subject information within one of said beams at said transform plane by positioning within said plane an optical spatial filter configured to block periodic nondefect information.

2. A method as claimed in Claim 1, wherein the subject is at least partially transparent, and wherein said light from said first beam is diffracted by the subject by passing said beam therethrough.

3. A method as claimed in Claim 1, wherein the subject is at least partially opaque, and including the further steps of:

directing said first beam (50) prior to diffraction, reflection and/or transmission thereof by the subject through a beamsplitter (62) in a first direction, through a quarter-wave plate (64), and onto the subject whereupon said beam is reflected therefrom; and

passing said beam back through said quarter-wave plate and into said beamsplitter in a direction opposite said first direction such that said beam is deflected thereby into a lens (68).

4. Apparatus for isolating microscopic defects in a macroscopic subject having periodic nondefect information the subject being disposed within a subject plane (66), comprising:

a source (40) for generating a substantially coherent beam of light (42);

means (48) for dividing said beam into a first beam (50) and a second beam (52);

means for directing said first beam (50) to the subject such that said beam is diffracted, reflected and/or transmitted thereby, whereafter said beam contains optical information regarding the subject;

means (70) for recording a hologram of the subject thereon;

means (68) for passing therethrough said first beam containing subject information, focusing said beam to define a fourier transform within a transform plane (91), and imaging said beam onto or near said recording means;

means (M10, M11) for directing said second beam (52) to said recording means (70) from a first direction at a predetermined angle of incidence thereon so as to form an interference pattern;

means (M12) for directing said second beam to said recording means in a direction conjugate to said first direction for diffraction thereby into said means (68) for passing, focusing and imaging the first beam, in a direction exactly opposite to that travelled by said first beam therethrough, so that subject information is carried within said second beam and a holographic image is reconstructed at said subject plane; and

means for manipulating said subject information contained within one of said beams at said Fourier transform plane (91), including an optical spatial filter configured to block and thereby remove periodic nondefect information, said filter being disposable within said transform plane (91).

5. Apparatus as claimed in Claim 4, wherein said means (68) for passing therethrough, focusing, and imaging said first beam is a lens.

6. Apparatus as claimed in Claim 5 including means (62) for directing said first beam to said lens (68) following diffraction, reflection, and/or transmission of said beam by the subject.

7. Apparatus as claimed in Claim 6, wherein said directing means includes a half-wave plate disposed for rotation of the plane polarization of said first beam following diffraction, reflection, and/or transmission thereof by the subject, and a beamsplitter (62) disposed for deflecting said repolarized first beam into said lens (68).

**Patentansprüche**

1. Verfahren zum Isolieren mikroskopischer Defekte in einem makroscopischen Objekt (66) mit periodischer Defektfrei-Information, wobei das Objekt in einer Objektebene angeordnet ist, das Verfahren gekennzeichnet, durch die Schritte:—

Richten eines ersten kohärenten Lichtstrahls (50) auf das Objekt (66) derart, daß das Licht dadurch gebeugt, reflektiert und/oder durchgelassen wird, wonach dieser Strahl die das Objekt betreffende optische Information enthält;

Fokussieren dieses die optische Information des Objektes enthaltenden Strahls, derart, um eine Fourier-Transformationsebene (91) zu definieren und um diese Information in einer Bildebene hinter dieser Transformationsebene darzustellen;

eine Disposing-Anordnung (70) für das Aufzeichnen eines Hologramms darauf, an oder nächst dieser Bildebene derart, um darauf den die Objekt-Information enthaltenden Strahl zum empfangen;

Richten eines zweiten kohärenten Lichtstrahls (52) auf diese Aufzeichnungs-Anordnung (70) aus einer ersten Richtung derart, um ein Störmuster mit dem die Objekt-Information enthaltenden ersten Strahl (50) auszubilden;

Aufzeichnen eines Hologramms (88) der Objekt-Information auf dieser Aufzeichnungs-Anordnung (70);

Richten diese zweiten Strahls (52) auf die Aufzeichnungs-Anordnung aus einer Richtung konjugiert zur ersten Richtung zur Beugung, damit zur Objektebene in einer Richtung exakt entgegengesetzt zu der vom ersten Strahl mit der darin enthaltenen Objekt-Information zurückgelegten, wodurch die Fourier-Transformation an der Transformationsebene redefiniert und die Objekt-Information im zweiten Strahl zur Objektebene getragen wird, und

Manipulieren der in einem der zwei Strahle enthaltenen Objekt-Information an der Transformationsebene zum Entfernen der periodischen Defektfrei-Information durch Blockieren zumindest eines Teils der Objekt-Information in einem der Strahle an der Transformationsebene durch die Anordnung eines optischen Raumfilters in dieser Ebene, das für die Blockierung der periodischen Defektfrei-Information ausgelegt ist.

2. Verfahren nach Anspruch 1, dadurch gekennzeichnet, daß das Objekt zumindest teilweise transparent ist, und daß das Licht des ersten Strahls von dem Objekt gebeugt wird, indem der Strahl durch dieses geleitet wird.

3. Verfahren nach Anspruch 1, dadurch gekennzeichnet, daß das Objekt zumindest teilweise lichtundurchlässig ist und das Verfahren die weiteren Schritte einschließt:

Richten des ersten Strahls (50) vor dem Beugen, Reflektieren und/oder Übertragen desselben durch das Objekt, durch einen Strahlzerleger (62) in einer ersten Richtung durch eine Lambda-Viertel-Platte (64) und auf das Objekt, wonach der Strahl von diesem relektiert wird, und

Rückführen dieses Strahls durch die Lambda-Viertel-Platte und in den Strahlzerleger in einer Richtung entgegengesetzt der ersten Richtung derart, daß der Strahl dadurch in eine Linse (68) abgelenkt wird.

4. Vorrichtung zum Isolieren mikroskopischer Defekte in einem makroskopischen Objekt mit periodischer Defektfrei-Information, wobei das Objekt in einer Objektebene (66) angeordnet ist, gekennzeichnet durch eine Source (40) zur Erzeugung eines im wesentlichen kohärenten Lichtstrahls (42);

eine Anordnung (48) für die Teilung dieses Strahls in einen ersten Strahl (50) und einen zweiten Strahl (52);

eine Anordnung für das Richten des ersten Strahls (50) zum Objekt hin derart, daß der Strahl dadurch gebeugt, reflektiert und/oder durchgelassen wird, wonach dieser Strahl die das Objekt betreffende optische Information enthält;

eine Anordnung (70) für das Aufzeichnen eines Hologramms des Objekts auf dieser;

eine Anordnung (68) für das Passieren des die Objekt-Information enthaltenden ersten Strahls durch diese, Fokussieren des Strahls zum Definieren einer Fourier-Transformation in einer Transformationsebene (91) und Darstellen des Strahls auf oder nächst der Aufzeichnungs-Anordnung;

eine Anordnung (M10, M11) für das Richten des zweiten Strahls (52) auf die Aufzeichnungs-Anordnung

9

(70) aus einer ersten Richtung in einem bestimmten Einfallwinkel dazu derart, daß ein Störmuster ausgebildet wird;

eine Anordnung (M12) für das Richten des zweiten Strahls auf die Aufzeichnungs-Anordnung in einer Richtung konjugiert zur ersten Richtung für die Beugung dadurch in die Anordnung (68) zum Passieren. Fokussieren und Darstellen des ersten Strahls, in einer Richtung exakt entgegengesetzt zu der vom ersten Strahl zurückgelegten, so daß die Objekt-Information im zweiten Strahl getragen wird und eine holographische Darstellung an der Objektebene rekonstruiert wird; und

eine Anordnung zum Manipulieren der einem der zwei Strahle enthaltenen Objekt-Information an der Fourier-Transformationsebene (91), einschließend eines optischen Raumfilters, das für die Blockierung und dadurch Entfernen der periodischen Defektfrei-Information ausgelegt ist, wobei der Filter in der Transformationsebene (91) angeordnet ist.

5. Vorrichtung nach Anspruch 4, dadurch gekennzeichnet, daß die Anordnung (68) für das Passieren, Fokussieren und Darstellen des ersten Strahls eine Linse ist.

6. Vorrichtung nach Anspruch 5, dadurch gekennzeichnet, daß eine Anordnung (62) eingeschlossen ist, die den ersten Strahl nachfolgend der Beugung, Reflektion und/oder den Durchgang dieses ersten Strahls durch das Objekt auf die Linse (68) richtet.

7. Vorrichtung nach Anspruch 6, dadurch gekennzeichnet, daß die Ausrichtungs-Anordnung eine Lambda-Halbe-Platte in Anordnung für die Drehung der Planpolarisation des ersten Strahls nach der Beugung, Reflektion und/oder den Durchgang desselben durch das Objekt, und einen Strahlzerleger (62) in Anordnung für die Ablenkung des repolarisierten ersten Strahls in die Linse (68) einschließt.

## Revendications

1. Procédé pour isoler des défauts microscopiques sur un objet macroscopique (66) ayant une information périodique sans défaut, l'objet étant disposé dans un plan objet, comprenant les étapes suivantes:

on dirige un premier faisceau de lumière cohérente (50) sur l'objet (66) de façon que ladite lumière soit ainsi diffractée, réfléchie, et/ou transmise, apres quoi ledit faisceau contient une information optique relative a l'objet;

on focalise ledit faisceau contenant ladite information objet de façon à définir un plan (91) de transformation de Fourier et à former l'image de ladite information dans un plan image au-delà dudit plan de transformation;

on dispose un moyen (70) pour enregistrer dessus un hologramme dans, ou près dudit plan image, de façon à recevoir dessus ledit faisceau contenant ladite information objet;

on dirige un second faisceau de lumiere cohérente (52) sur ledit moyen d'enregistrement (70) depuis une première direction de façon à former un motif d'interférence avec ledit premier faisceau (50) contenant ladite information objet;

on enregistre un hologramme (88) de ladite information objet sur ledit moyen d'enregistrement (70);

on dirige ledit second faisceau (52) sur ledit moyen d'enregistrement depuis une direction conjuguée de ladite première direction pour ainsi faire une diffraction sur le plan objet dans une direction exactement opposée à celle suivie par ledit premier faisceau contenant ladite information objet, ce qui a pour effet que ladite transformation de Fourier est redéfinie sur ledit plan de transformation et ladite information objet est transportée dans ledit second faisceau sur le plan objet; et

on manipule ladite information objet contenue dans l'un desdits faisceaux audit plan de transformation pour enlever l'information périodique sans défaut en bloquant au moins une partie de ladite information objet dans un desdits faisceaux audit plan de transformation en positionnant dans ledit plan un filtre spatial optique configuré pour bloquer l'information périodique dans défaut.

2. Procédé selon la revendication 1, dans lequel l'objet est au moins partiellement transparent, et dans lequel ladite lumière dudit premier faisceau est diffractée par l'objet en y faisant passer ledit faisceau à travers.

3. Procédé selon la revendication 1, dans lequel l'objet est au moins en partie opaque, et comprenant les autres étapes suivantes:

on dirige ledit premier faisceau (50) avant sa diffraction, réfléxion et/ou transmission par l'objet a travers un diviseur de faisceau (62) dans une première direction, à travers une plaque (64) quart d'onde, et sur l'objet où ledit faisceau est refléchi depuis là; et

on fait passer ledit faisceau en retour à travers ladite plaque quart d'onde et dans ledit diviseur de faisceau dans une direction opposée à ladite première direction de façon que ledit faisceau soit ainsi dévié dans une lentille (68).

4. Appareil pour isoler des défauts microscopiques sur un objet macroscopique ayant une information périodique sans défaut, l'objet étant disposé dans un plan objet (66), comprenant:

une source (40) pour engendrer un faisceau de lumière (42) sensiblement cohérent;

un moyen (48) pour diviser ledit faisceau en un premier faisceau (50) et un second faisceau (52);

un moyen pour diriger ledit premier faisceau (50) sur l'objet de façon que ledit faisceau soit ainsi diffracté réfléchi et/ou transmis, après quoi ledit faisceau contient une information optique relative à l'objet;

un moyen (70) pour enregistrer dessus un hologramme de l'objet;

un moyen (68) pour y faire passer à travers ledit premier faisceau contenant l'information objet, focalisant ledit faisceau pour définir une transformation de Fourier dans un plan de transformation (91), et on forme l'image dudit faisceau sur ledit moyen d'enregistrement ou au voisinage;

un moyen (M10, M11) pour diriger ledit second faisceau (52) sur ledit moyen d'enregistrement (70) depuis une premier direction a une angle d'incidence prédéterminé sur ledit moyen, de façon à former un motif d'inteférence;

un moyen (M12) pour diriger ledit second faisceau sur ledit moyen d'enregistrement dans une direction conjuguée de ladite première direction, pour obtenir ainsi une diffraction dans ledit moyen (68) pour faire passer, focaliser et former l'image du premier faisceau dans une direction exactement opposée à celle qui est suivie par ledit premier faisceau à travers cela, de façon que l'information objet soit transportée dans ledit second faisceau et une image holographique soit reconstruite dans ledit plan objet; et

un moyen pour manipuler ladite information objet contenue dans un desdits faisceaux sur ledit plan de transformation de Fourier (91), incluant un filtre optique spatial configuré pour bloquer et ainsi enlever l'information périodique sans défaut, ledit filtre pouvant être disposé dans ledit plan de transformation (91).

5. Appareil selon la revendication 4, dans lequel ledit moyen (68) pour y faire passer à travers, focaliser et former l'image dudit premier faisceau est une lentille.

6. Appareil selon la revendication 5, comprenant un moyen (62) pour diriger ledit premier faisceau sur ladite lentille (68) suivant la diffraction, la réflexion et/ou la transmission dudit faisceau par l'objet.

7. Appareil selon la revendication 6, dans lequel ledit moyen pour diriger comporte une plaque quart d'onde disposée pour pouvoir tourner le plan de polarisation dudit premier faisceau suivant sa diffraction, réfléxion et/ou transmission par l'objet, et un diviseur de faisceau (62) disposé pour dévier ledit premier faisceau repolarisé dans ladite lentille (68).

FIG-1

IMAGE PLATE

$l_1$  2MM  $l_2$  24  $l_3$  26  37  SUBJECT PLANE

28  30  f/4.62  26  34  f/4.5

75MM

150 MM    150 MM    300 MM    225 MM

FIG-2

$l_1$  12.5 MM  $l_2$  24  $l_3$  SUBJECT PLANE  34  36  31.5MM  37

IMAGE PLATES

150 MM    150 MM    300 MM    225 MM

FIG-3

$l_1$  16.6MM  $l_2$  24  $l_3$  SUBJECT PLANE  34  38  50MM  37

IMAGE PLATE

150 MM    150 MM    300 MM    225 MM

EP 0 101 507 B1

1/4

FIG-4a

SUBJECT VOLUME — IMAGING LENS — ABERRATED IMAGE — HOLOGRAPHIC PLATE

ILLUMINATION BEAM

COLLUMINATED REFERENCE BEAM

12 14 16 10

FIG-4b

DIFFRACTION LIMITED RECONSTRUCTION — ABERRATED RECONSTRUCTION — CONJUGATE OF ORIGINAL REFERENCE BEAM

22 20 14 18

20 IMAGING LENS — HOLOGRAPHIC PLATE 10

FIG-5

ARGON LASER — 40 — M1

42 — POLARIZING BEAM SPLITTING CUBE — 1/4 WAVE PLATE

M2 — 1/2 WAVE PLATE — 56 54 60 58 62 64 98 — MICROSCOPE

46 48 50 — M11 — 2f — 66

POLARIZING BEAM SPLITTER — BEAM EXPANDER — REFERENCE PATH — 86 68 91 — 2f — 70

52 78 — 80 84 — M9 — 90 — 2f — 88

REMOVABLE MIRROR — M10 — M12

100

2

FIG-6

FIG-7

FIG-8

FIG-9

FIG-10